# FASCICULE DE BREVET EUROPEEN

(11) **EP 0 790 546 B1**
(45) Date de publication et mention de la délivrance du brevet: **09.04.2003**
(21) Numéro de dépôt: 97400181.0
(22) Date de dépôt: 27.01.1997
(51) Int. Cl.: G06F 1/00

(54) **Equipement téléphonique d'abonné à lecteur de carte et à fonction transactionnelle**
Teilnehmer-Kartenleser-Telefongerät mit Transaktionsfähigkeit
Subscriber card reader telephone equipment having transaction functions

(30) Priorité: 30.01.1996 FR 9601085
(43) Date de publication de la demande: 20.08.1997
(73) Titulaire: ALCATEL, 75008 Paris (FR)
(72) Inventeur: Courdier, Louis, 67200 Strasbourg (FR); Godard, Bernard, 95120 Ermont (FR); Mignot, Patrice, 67400 Illkirch (FR)
(74) Mandataire: Sciaux, Edmond

(56) Documents cités:
- EP-A- 0 417 447
- WO-A-88/07824
- DE-U- 9 409 712
- FR-A- 2 619 941
- ELEKTRONIK, vol. 36, no. 21, 16 Octobre 1987, pages 126-130, XP000030968 GUNTNER M ET AL: "MEHR ALS EINE TASTATUR"

## Description

L'invention concerne un équipement téléphonique ou radiotéléphonique transactionnel, de type poste ou terminal individuel d'abonné à lecteur de carte, destiné à permettre la réalisation d'opérations relatives à des transactions par l'usager de l'équipement, avec au moins un serveur transactionnel distant, via un réseau de télécommunications, auquel l'équipement et le serveur ont accès, notamment pour l'obtention d'un produit ou d'un service, lorsque cette réalisation implique l'utilisation par l'usager d'une carte, telle que par exemple une carte d'autorisation ou de paiement à mémoire et logique internes, et que le serveur dispose de capacités de communication en mode vocal. Elle concerne aussi un agencement de clavier pour équipement transactionnel et en particulier pour équipement tel que défini ci dessus.

La commande à distance et le télépaiement par voie téléphonique de produits ou services sont des techniques connues qui ont tendance à se développer en raison de la diffusion de serveurs transactionnels dotés de moyens leur permettant de produire et/ou d'interpréter des signaux vocaux et en conséquence de communiquer avec des usagers par l'intermédiaire de postes téléphoniques ou radiotéléphoniques courants, par exemple des modèles simplement équipés de claviers comportant un pavé de dix touches de numérotation et de deux touches supplémentaires marquées * et #. Comme il est connu de tels serveurs peuvent être exploités pour réaliser des transactions entre un usager et un fournisseur de produit ou de service distant par l'intermédiaire d'un réseau de télécommunications auquel usagers et fournisseurs ont accès. Ces transactions sont susceptibles d'être très diverses et si elles peuvent être simples par exemple dans le cas de demande et de fourniture d'une autorisation de faire, elles peuvent aussi être très élaborées et comporter une suite complexe d'opérations et donc d'échanges d'informations entre usager et fournisseur et en conséquence entre équipement d'abonné et serveur transactionnel.

Comme il est connu, les cartes et notamment les cartes à mémoire et logique internes constituent un moyen commode d'identification qui permettent à leurs détenteurs de se faire reconnaître comme habilités à obtenir des produits ou services de la part de fournisseurs et qui permettent à ces derniers de se faire payer.

Un procédé connu de commande à distance et de télépaiement implique notamment qu'un usager, ayant appelé un serveur transactionnel par l'intermédiaire d'un poste téléphonique, transmette vers ce serveur le numéro d'une carte accréditive dont il dispose, suite à une demande vocale expresse produite par le serveur appelé. Ce numéro de carte est par exemple tabulé sur le clavier du poste téléphonique dont se sert l'usager et il est transmis par voie téléphonique de la même manière que les signaux de numérotation qui sont transmis par le poste après avoir été produits par l'intermédiaire du même clavier lors de tout appel à partir de ce poste. Il est donc relativement simple pour un tiers mal-intentionné de prendre connaissance du numéro d'une carte ainsi communiqué par un usager à un serveur. De meilleures conditions de sécurité sont en conséquence recherchées.

Le document FR-A1-2,619,941 décrit un système pour contrôler la liaison entre deux terminaux d'une installation de traitement de données, par l'intermédiaire du réseau téléphonique commuté, et comprenant un dispositif de protection contre l'intrusion qui détecte l'ouverture du coffret, renfermant une carte électronique là dedans.

L'invention propose donc, selon la revendication 1, un équipement téléphonique ou radiotéléphonique d'abonné à lecteur de carte électronique et à fonction transactionnelle, destiné à permettre la réalisation d'opérations relatives à des transactions impliquant l'usage d'une carte et préférablement d'une carte à mémoire et logique internes, avec au moins un serveur transactionnel via un réseau de télécommunications auquel l'équipement et le serveur ont chacun accès, notamment pour l'obtention d'un produit ou d'un service. L'équipement est doté de moyens matériels d'interdiction enfermant au moins un microcontrôleur de gestion de l'équipement dans un module et rendant cet équipement inexploitable en cas de tentative d'ouverture du module.

Selon une caractéristique de l'invention, l'équipement comporte des moyens pour assurer la confidentialité des informations, produites à l'aide d'un clavier dont il est muni, afin d'être transmises à destination d'une carte, via le lecteur de carte, les dits moyens incluant des moyens matériels rendant le clavier inexploitable en cas de tentative de démontage et des moyens matériels d'interdiction qui enferment au moins un circuit du clavier, avec le microcontrôleur auquel ce circuit est relié et éventuellement une partie du lecteur de carte de l'équipement.

L'invention concerne aussi, selon la revendication 5, un agencement de clavier pour équipement téléphonique ou radiotéléphonique d'abonné, à clavier et à lecteur de carte et en particulier de carte à mémoire et logique internes, l'équipement étant doté de moyens de communication lui permettant d'émettre et/ou de recevoir des informations destiné à permettre la réalisation d'opérations relatives à des transactions impliquant l'usage d'une carte. L'équipement est doté de moyens matériels d'interdiction enfermant au moins un microcontrôleur (13) de gestion de l'équipement dans un module et rendant cet équipement inexploitable en cas de tentative d'ouverture du module.

Selon une caractéristique de l'invention, cet agencement comporte des moyens pour assurer la confidentialité des informations produites à l'aide du clavier que comporte l'équipement afin d'être transmises à destination d'une carte, via le lecteur de carte, ces moyens comprenant des moyens matériels rendant le clavier inexploitable en cas de tentative de démontage et des moyens matériels d'interdiction enfermant au moins un circuit du clavier dans un module, avec au moins un microcontrôleur de gestion auquel le circuit du clavier est relié et éventuellement une partie du lecteur de carte, l'enfermement étant réalisé de manière à rendre le module inexploitable en cas de tentative d'ouverture.

L'invention, ses caractéristiques et ses avantages sont précisés dans la description qui suit en liaison avec la figure unique définie ci-dessous.

Cette figure unique présente un schéma synoptique relatif à un exemple d'ensemble permettant la mise en oeuvre du procédé selon l'invention.

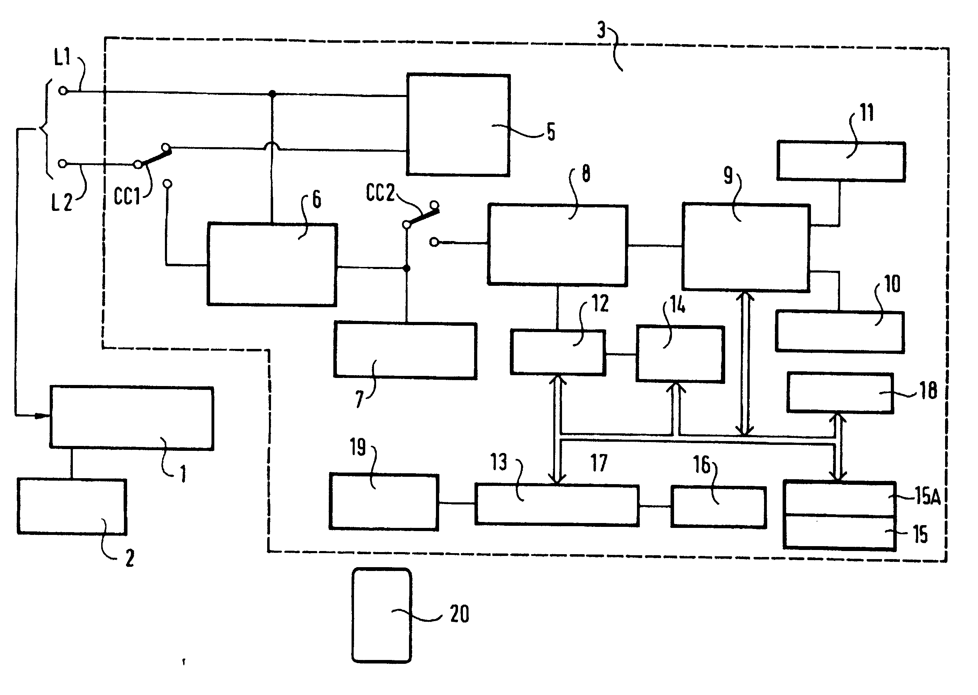

L'ensemble montré en figure 1 comporte un réseau de télécommunications 1 auquel sont notamment reliés divers équipements dont au moins un serveur transactionnel 2 susceptible d'être exploité avec le réseau de télécommunications 1. Ce serveur transactionnel est ici supposé prévu pour pouvoir communiquer en mode vocal avec des équipements de télécommunications, de type poste téléphonique et/ou radiotéléphonique ou supportant une fonction d'un tel type, après mise en communication suite à appel selon une procédure usuelle en la matière.

Un tel serveur transactionnel 2 comporte classiquement des moyens connus en eux-mêmes lui permettant de se connecter à un réseau de télécommunications usuel. Dans la réalisation envisagée, le serveur transactionnel 2 comporte des moyens spécialisés, connus en eux-mêmes lui permettant de produire des signaux vocaux à destination d'équipements de type poste téléphonique ou radiotéléphonique et/ou d'interpréter de tels signaux vocaux lui parvenant de tels équipements. Comme il est connu, ces signaux vocaux sont susceptibles de correspondre à des paroles elles-mêmes susceptibles d'être interprétées par les usagers qui utilisent les équipements évoqués ci-dessus. Ils sont aussi susceptibles de correspondre à des informations de signalisation transmises dans la bande vocale comme les signaux correspondants aux paroles.

L'organisation d'un tel serveur n'est pas développée ici dans la mesure où, connue par ailleurs, elle n'a pas de rapport direct avec l'objet de la présente invention.

Les équipements de télécommunications susceptibles d'entrer en communication avec le serveur transactionnel 2, qui sont notamment susceptibles d'être de type téléphonique ou radiotéléphonique, sont symbolisés par un poste téléphonique 3 sur la figure 1. Il doit être compris que ce qui est indiqué concernant le poste téléphonique dans la suite de la description concerne tant un tel poste qu'un éventuel terminal radio-téléphonique globalement équivalent sur le plan fonctionnel général. Il doit aussi être compris que l'invention ne se limite pas au poste téléphonique 3 décrit ci-dessous, mais est également susceptible d'être appliquée à d'autres postes ou terminaux et en particulier à des postes ou terminaux de réseaux numériques à intégration de services.

Le poste téléphonique 3 présenté est ici supposé relié au réseau de télécommunication 1 par une classique ligne téléphonique 4 auquel il est connecté par l'intermédiaire de deux bornes L1 et L2. Un circuit de sonnerie 5 et un dispositif d'entrée 6 sont supposés reliés aux bornes L1 et L2 selon un montage usuel impliquant un organe de commutation classiquement dénommé crochet commutateur, dont un élément référencé CC1 connecte le circuit de sonnerie 5 à la ligne téléphonique 4, en l'absence de communication, lorsque le crochet commutateur est maintenu dans une première position, par exemple par le poids d'un combiné microphone-écouteur reposant sur lui et non représenté ici. Le décrochage du combiné ou une opération équivalente place l'élément CC1 dans une seconde position pour laquelle le dispositif d'entrée 6 est connecté aux bornes L1 et L2 de la ligne téléphonique, alors que la liaison entre le circuit de sonnerie et cette ligne est interrompue. Le poste téléphonique 3 est alors téléalimenté par l'intermédiaire de cette ligne téléphonique 4, le courant continu alors obtenu est transmis à un circuit d'alimentation 7 chargé de desservir les différents éléments consommateurs que comporte le poste, ce circuit d'alimentation 7 étant éventuellement susceptible d'être relié à une source d'énergie électrique disponible localement si besoin est, comme il est connu par ailleurs.

L'organe de commutation évoqué plus haut comporte aussi un second élément référencé CC2 qui est actionné avec l'élément CC1 et qui relie un circuit de transmission 8 que comporte le poste à la ligne téléphonique 4, via le dispositif d'entrée 6, lorsque les éléments CC1 et CC2 sont simultanément placés dans leur secondes positions respectives. Ce circuit de transmission 8 est ici supposé de type classique, il comporte par exemple un circuit de conversion de signaux dit deux fils-quatre fils par l'intermédiaire duquel est desservi un circuit audio comportant au moins un microphone 10 et un écouteur ou haut-parleur 11. Le circuit de transmission 8 est également relié à un modem 12 associé à un microcontrôleur 13 de gestion du poste téléphonique 3 pour permettre à ce dernier de communiquer via la liaison téléphonique 4. Un générateur de signaux à fréquences vocales 14 est ici supposé associé au modem 12 et au microcontrôleur 13 pour permettre à ce dernier d'envoyer des signalisations sous forme multifréquence via la liaison téléphonique 4, notamment en réponse aux tabulations effectuées par un usager sur un davier de numérotation 15 que comporte le poste téléphonique 3. Les échanges entre le microcontrôleur 13, des mémoires mortes et/ou vives 16 qui lui sont associées s'effectuent classiquement sous forme numérique par l'intermédiaire d'une liaison bidirectionnelle 17, de type bus, à laquelle est aussi connecté le modem 12, un afficheur 18 et le clavier 15 ou plus précisément un circuit ou des circuits 15A de ce clavier qui permettent de transformer sous forme de signaux numériques, les indications de commande manuellement générées par un usager au moyen des touches que le clavier comporte. Un lecteur de carte 19 est ici associé au poste téléphonique 3, il est par exemple logé dans ce poste de manière à pouvoir communiquer avec une carte 20, préférablement à mémoire et logique internes, que par exemple il reçoit, lorsqu'elle est placée par un usager d'une manière appropriée.

Comme il est connu, il peut éventuellement suffire qu'une carte soit placée à proximité du lecteur 19, si cette carte et ce lecteur sont prévus pour communiquer entre eux sans contact.

Lorsque la carte 20 est en condition pour être en liaison avec le lecteur 19, elle peut échanger des informations, par exemple sous forme numérique, avec le poste téléphonique 3 et plus particulièrement avec le microcontrôleur 13 qu'il comporte. Ces informations peuvent notamment être exploitées localement dans le poste par exemple pour présentation sur l'afficheur 18, ou transcodées de manière à être transmises via la liaison téléphonique 4 et ici le circuit de transmission 8. D'autres informations peuvent être introduites par un usager au moyen du clavier 15 en vue d'être transmises soit vers une carte 20, soit vers la liaison téléphonique 4, via notamment le circuit de clavier 15A.

Dans une forme préférée de réalisation, pour des raisons de sécurité et en vue d'assurer la confidentialité des informations produites à l'aide du clavier, notamment à destination d'une carte 20, via le lecteur 19, le poste téléphonique 3 comporte des moyens matériels rendant le clavier 15 inexploitable, si ce dernier est soumis à une tentative de démontage.

Ceci est par exemple obtenu en réalisant un clavier dont au moins certains des éléments constitutifs sont positionnés d'une manière déterminée par un appareillage spécifique lors de la fabrication du clavier qui n'est plus conservée si une tentative de démontage est réalisée et qui n'est pas reproductible une fois cette tentative effectuée.

De plus des moyens matériels d'interdiction sont associés au clavier et sont chargés d'assurer un enfermement des éléments les plus critiques dans un même module conçu de manière que l'ensemble formé par ces éléments devienne inexploitable, en cas d'ouverture du module..

Ce module contient par exemple au moins le circuit de clavier 15A, le microcontrôleur 13 et au moins une de ses mémoires 16 et lorsque possible une partie du lecteur de carte 19.

Un tel module est par exemple réalisé sous la forme d'un boîtier comportant des moyens destructifs prévus pour détériorer au moins un des éléments enclos soit directement, soit éventuellement au niveau d'une ou de plusieurs liaisons reliant cet élément à un autre dans le module, par exemple par cassure, en cas d'ouverture du boîtier.

Un tel module peut aussi être réalisé sous la forme d'un bloc moulé dans lequel dans lequel les éléments destinés à être enfermés sont au moins partiellement noyés, avec leurs liaisons respectives.

Des mesures permettant de rendre destructive toute tentative d'intervention visant à une ouverture d'un module tel que défini ci-dessus sont connues de l'homme de métier elles ne seront pas évoquées ici.

Elles ont pour objectif d'interdire toute intervention physique directe sur les éléments noyés et en particulier toute intervention visant à modifier l'aiguillage de données numériques sécuritairement sensibles qui sont prévues pour être tabulées par l'usager sur le clavier sur demande expresse du serveur et/ou éventuellement de la carte et qui sont impliquées dans certaines opérations et en particulier en cas de commande à distance et/ou de télépaiement d'objet ou de services.

De plus le microcontrôleur comporte des moyens logiciels prévus non modifiables et ici qualifiés d'inaltérables, empêchant le transfert par voie téléphonique ou radiotéléphonique des données produites par le clavier à destination d'une carte, via le lecteur de carte. Ces moyens réalisent de manière connue en soi un blocage évitant notamment tout aiguillage imprévu des données numériques sécuritairement sensibles destinées à être transmises du clavier à la carte dans les conditions évoquées ci-dessus, c'est-à-dire par exemple sur requête spécifique d'un serveur.

Selon un exemple de réalisation de l'invention, le microcontrôleur comporte des moyens essentiellement logiciels, supposés connus en eux-mêmes, pour crypter les informations fournies à destination d'un serveur 2 soit par un usager à l'aide du clavier 15 ou éventuellement d'un microphone 10, soit encore éventuellement à partir d'une carte 20 via le lecteur de carte 19.

Ce cryptage s'effectue par exemple à l'aide d'un algorithme public à partir d'indications fournies par un serveur 2 et/ou éventuellement par une carte pour une transaction donnée.

Selon une variante additionnelle de réalisation, le microcontrôleur comporte des moyens aussi essentiellement logiciels conçus de manière connue en elle-même pour permettre d'exploiter les touches du clavier dans le cadre d'opérations d'exploitation de la carte en local, hors du cadre d'une communication impliquant l'usage du réseau de télécommunications 1. Il est ainsi possible de réaliser des opérations de lecture d'informations stockées dans une carte et/ou à stocker dans cette carte sous le contrôle de la logique interne incluse dans cette carte, avec par exemple affichage de tout ou partie des informations, commandes et comptes-rendus sur l'afficheur 18 associé au clavier 15.

Par ailleurs un clavier et un module décrit ci-dessus dans le cadre d'un équipement téléphonique sont susceptibles de constituer un agencement pour un équipement transactionnel doté d'un lecteur de carte et de moyens de communication lui permettant d'émettre et/ou de recevoir des informations. La suite de la description figurant ci-dessous donne un exemple non limitatif de mise en oeuvre d'un équipement téléphonique ou radiotéléphonique d'usager selon l'invention en liaison avec un serveur transactionnel vocal 2, via un réseau de télécommunications.

D'une manière générale une transaction entre un usager disposant d'un équipement tel que celui symbolisé par le poste 3 sur la figure 1, implique systématiquement une phase de mise en communication téléphonique et/ou radiotéléphonique entre un poste téléphonique tel que 3 et un serveur transactionnel 2, via un réseau de télécommunications 1, usuellement à l'initiative d'un usager du poste téléphonique ou éventuellement et alternativement à l'initiative du serveur.

Suite à un échange plus ou moins long d'informations par exemple sous forme vocale entre poste 3 et serveur 2 en communication en vue de l'obtention d'un produit ou d'un service, il est prévu une phase au cours de laquelle il est prévu de faire intervenir une carte 20, de type carte de paiement ou équivalent dans la procédure d'échange en cours entre poste et serveur en communication, cette intervention impliquant l'usage du lecteur de carte 19 que comporte le poste. Il est alors prévu une phase de contrôle au cours de laquelle le serveur envoie une demande, par exemple sous la forme d'une signalisation multifréquence particulière et/ou d'un message vocal, à destination du poste pour faire vérifier par ce dernier la présence d'une carte 20 appropriée et valide dûment reliée au lecteur de carte 19 et pour demander, en ce cas, que l'usager du poste tabule sur le clavier 15 du poste le numéro de code confidentiel relatif à la carte et que ce numéro de code soit vérifié par la logique interne que comporte cette carte. Dans la forme de mise en oeuvre envisagée, le microcontrôleur 13 du poste communique avec la carte 20 par l'intermédiaire du lecteur de carte 19 pour obtenir des données spécifiques relatives à la conformité et à la validité de cette carte, afin de vérifier que la carte utilisée correspond bien à une carte de type requis pour la transaction envisagée entre le serveur et le poste et que cette carte alors utilisée est valide. Les résultats obtenus sont alors communiqués pour information au serveur 2 par le microcontrôleur 13 du poste. Le serveur demande alors à l'usager de tabuler le code confidentiel relatif à la carte 20 qu'il utilise, sur le clavier 15 du poste téléphonique 3 utilisé, cette demande étant ici supposée réalisée par envoi d'un message vocal du serveur à l'usager par l'intermédiaire du circuit audio 9 du poste.

La tabulation par l'usager sur le clavier 15 des chiffres constituant le code confidentiel entraîne la transmission de signaux correspondants à ces chiffres du clavier vers le microcontrôleur 13 du poste. Comme indiqué plus haut ce microcontrôleur est ici supposé contenu dans un module fermé avec le ou les circuits participant à l'élaboration des signaux résultant des tabulations effectuées par l'usager au niveau du clavier 15, afin de réduire les risques de capture et d'exploitation frauduleuses d'informations tabulées et notamment des codes confidentiels. Par ailleurs le microcontrôleur 13 comporte des moyens de commande internes, par exemple réalisés sous forme logicielle inaltérable, pour aiguiller vers le seul lecteur de carte 19 les signaux de numérotation correspondant aux chiffres d'un numéro tabulé au clavier 15 qui sont fournis par ce clavier pour vérification par la logique interne d'une carte 20 alors utilisée avec ledit lecteur de carte. Ces moyens sont ici supposés mis en oeuvre en cas de réception par le poste téléphonique 3 et via la ligne téléphonique 4 d'une demande de tabulation du code confidentiel relatif à une carte 20, à mémoire et logique internes, alors utilisée en liaison avec le poste, cette demande étant a priori supposée émaner du serveur 2 alors en communication avec ledit poste.

Le résultat de toute vérification de code confidentiel effectuée comme connu par une carte 20, à mémoire et logique internes, est transmis sous forme numérique par cette carte au microcontrôleur 13 du poste avec lequel cette carte est utilisée, via le lecteur de carte 19, en vue de la transmission de ce résultat au serveur 2 avec lequel le poste est alors en communication, par exemple sous la forme d'une signalisation multifréquence particulière.

Les opérations de communication se poursuivent alors et comportent au moins une phase de transmission d'au moins une information codée et en particulier d'une information d'identification relative à la carte 20 utilisée en liaison avec le poste 3, ainsi que par au moins une information de commande, ces informations étant émises en mode vocal, par ce poste vers le serveur 2.

Dans une forme préférée de réalisation, au moins certaines des informations transmises sont cryptées à des fins de confidentialité à l'initiative du serveur 2, ce cryptage s'effectue par exemple selon une des techniques connues en la matière Le cryptage s'effectue préférablement à l'aide d'un algorithme connu qui n'implique donc aucune mémorisation d'information secrète au niveau du poste.

Il est par exemple prévu que sur requête spécifique du serveur 2, un cryptage des informations sensibles émanant de l'usager est effectué par le microprocesseur 13 au niveau du poste, à l'aide d'une clé de cryptage que fournit alors la carte de paiement électronique utilisée et d'un aléa que fournit le serveur lui-même.

Bien entendu, comme connu en la matière, au moins une partie des opérations, en particulier dans le cas de télépaiement sont susceptibles d'être assurées par un serveur spécialisé, tel qu'un serveur bancaire de paiement, non représenté ici qui peut être différent du serveur 2 initialement en communication avec le poste téléphonique 3 précédemment considéré, au moins une partie des échanges relatifs à une même communication étant dans ce cas au moins temporairement reroutée.

## Revendications

1. Equipement téléphonique ou radiotéléphonique d'abonné à lecteur de carte électronique (19) et à fonction transactionnelle, destiné à permettre la réalisation d'opérations relatives à des transactions impliquant l'usage d'une carte (20), préférablement d'une carte à mémoire et logique internes, avec au moins un serveur transactionnel (2) via un réseau de télécommunications (1) auquel l'équipement (3) et le serveur (2) ont chacun accès, l'équipement doté de moyens matériels d'interdiction enfermant au moins un microcontrôleur (13) de gestion de l'équipement dans un module et rendant cet équipement inexploitable en cas de tentative d'ouverture du module, **caractérisé en ce que** l'équipement comporte des moyens pour assurer la confidentialité des informations produites à l'aide d'un clavier (15) que comporte l'équipement, afin d'être transmises à destination d'une carte (20), via le lecteur de carte (19), les dits moyens incluant des moyens matériels rendant le clavier inexploitable en cas de tentative de démontage et des moyens matériels d'interdiction qui enferment au moins un circuit (15A) du clavier, avec le microcontrôleur (13) auquel ce circuit est relié et éventuellement une partie du lecteur de carte (19) de cet équipement.

2. Equipement téléphonique ou radiotéléphonique d'abonné, selon la revendication 1, **caractérisé en ce que** le microcontrôleur (13) comporte des moyens logiciels inaltérables empêchant le transfert par voie téléphonique ou radiotéléphonique des données produites à l'aide du clavier (15) à destination d'une carte (20), via le lecteur de carte(19).

3. Equipement téléphonique ou radiotéléphonique, selon au moins l'une des revendications précédentes, **caractérisé en ce que** le microcontrôleur (13) comporte des moyens pour crypter les informations fournies à partir du clavier (15) et/ou d'une carte (20) et/ou d'un microphone (10) de l'équipement (3) à destination d'un serveur (2) auquel l'équipement est susceptible de se relier par l'intermédiaire du réseau de télécommunications (1) qu'il utilise, à partir d'indications fournies par le serveur, via la liaison alors établie entre eux, et/ou par une carte (20) via le lecteur de carte (19).

4. Equipement téléphonique ou radiotéléphonique, selon au moins l'une des revendications précédentes, **caractérisé en ce que** le microcontrôleur (13) comporte des moyens permettant d'exploiter les touches du clavier (15) pour réaliser en local des opérations d'exploitation de carte (20), et notamment d'écriture et de lecture, via le lecteur de carte (19).

5. Agencement de clavier pour équipement téléphonique ou radiotéléphonique d'abonné à clavier (15) et à lecteur (19) de carte (20) et en particulier de carte à mémoire et logique internes, l'équipement étant doté de moyens de communication (8, 12, 14) lui permettant d'émettre et/ou de recevoir des informations destiné à permettre la réalisation d'opérations relatives à des transactions impliquant l'usage d'une carte (20), ledit équipement étant doté de moyens matériels d'interdiction enfermant au moins un microcontrôleur (13) de gestion de l'équipement dans un module et rendant cet équipement inexploitable en cas de tentative d'ouverture du module, **caractérisé en ce que** ledit agencement comporte des moyens pour assurer la confidentialité des informations produites à l'aide du clavier (15) afin d'être transmises à destination d'une carte (20), via le lecteur de carte (19), ces moyens comprenant des moyens matériels rendant le clavier inexploitable en cas de tentative de démontage et des moyens matériels d'interdiction enfermant au moins un circuit (15A) du clavier dans un module, avec au moins un microcontrôleur de gestion (13) auquel le circuit du clavier est relié et éventuellement une partie du lecteur (19) de carte, l'enfermement étant réalisé de manière à rendre le module inexploitable en cas de tentative d'ouverture.

## Claims

1. Subscriber's telephone or radiotelephone equipment with electronic card reader (19) and transaction function facility, designed to allow transaction operations involving the use of a card (20), preferably a card with internal memory and internal logic, to take place with at least one transaction server (2) via a telecommunications network (1) to which both equipment (3) and server (2) have access, the equipment being fitted with a hardware locking device enclosing at least one equipment management microcontroller (13) in a module and disabling this equipment if an attempt is made to open the module, **characterized in that** the equipment is fitted with means designed to ensure confidentiality of the information entered via a keypad (15) which is part of the equipment, and to be transmitted to a card (20), via the card reader (19), said means including a hardware device disabling the keypad if an attempt is made to dismantle it, and a hardware locking device enclosing at least one circuit (15A) of the keypad with the microcontroller (13) to which this circuit is connected and possibly a part of the card reader (19) of this equipment.

2. Subscriber's telephone or radiotelephone equipment according to claim 1, **characterized in that** the microcontroller (13) is fitted with some unalterable software means preventing the telephone or radiotelephone transfer of data entered via the keypad (15) to be transmitted to a card (20) via the card reader (19).

3. Telephone or radiotelephone equipment according to at least one of the preceding claims, **characterized in that** the microcontroller (13) is fitted with some means designed to encrypt the information sent via the keypad (15) and/or a card (20) and/or a microphone (10) included in the equipment (3), to a server (2) to which the equipment can be connected via the telecommunications network (1) it uses, based on information supplied by the server via the call set up between them and/or by a card (20) via the card reader (19).

4. Telephone or radiotelephone equipment according to at least one of the preceding claims, **characterized in that** the microcontroller (13) is fitted with some means designed to allow the use of the keypad (15) for local operation of the card (20), such as read and write operations, via the card reader (19).

5. Keypad layout for subscriber's telephone and radiotelephone equipment, with keypad (15) and card (20) reader (19) especially for cards with internal memory and internal logic, the equipment being fitted with some means of communication (8, 12, 14) allowing it to transmit and/or receive information and designed to allow transaction operations involving the use of a card (20), said equipment being fitted with a hardware locking device enclosing at least one equipment management microcontroller (13) in a module and disabling this equipment if an attempt is made to open the module, **characterized in that** said layout comprises means designed to ensure confidentiality of the information entered via the keypad (15) and to be transmitted to a card (20), via the card reader (19), said means including a hardware device disabling the keypad if an attempt is made to dismantle it, and a hardware locking device enclosing at least one circuit (15A) of the keypad in a module, with at least one management microcontroller (13) to which the keypad circuit is connected and possibly a part of the card reader (19), the enclosure being such that the module is disabled if an attempt is made at opening it.

## Patentansprüche

1. Teilnehmer-Telefon- oder -Funktelefongerat mit elektronischem Kartenleser (19) und Geschäftsfunktion zum Ermöglichen der Durchführung von Geschafte betreffenden Operationen, die die Verwendung einer Karte (20), vorzugsweise einer Karte mit internem Speicher und interner Logik, erfordern, mit wenigstens einem Geschafts-Server (2) über ein Fernmeldenetz (1), auf das das Gerat (3) und der Server (2) jeweils Zugriff haben, wobei das Gerat mit materiellen Sperrmitteln ausgestattet ist, die wenigstens einen Mikrokontroller (13) zur Verwaltung des Geräts in einem Modul einschließen und das Gerat im Fall eines Versuchs, das Modul zu offnen, unbenutzbar machen, **dadurch gekennzeichnet, dass** das Gerät Mittel zum Gewahrleisten der Vertraulichkeit von mit Hilfe einer im Gerat enthaltenen Tastatur (15) zur Ubertragung an eine Karte (20) über den Kartenleser (19) eingegebenen Informationen umfasst, wobei diese Mittel materielle Mittel, die die Tastatur im Falle eines Versuchs der Demontage unbenutzbar machen, und materielle Sperrmittel umfassen, die wenigstens eine Schaltung (15A) der Tastatur zusammen mit dem Mikrokontroller (13), an den diese Schaltung angeschlossen ist, und evtl. einen Teil des Kartenlesers (19) dieses Geräts einschließen.

2. Teilnehmer-Telefon- oder -Funktelefongerat nach Anspruch 1, **dadurch gekennzeichnet, dass** der Mikrokontroller (13) unveränderbare Softwaremittel umfasst, die die Übertragung der mit Hilfe der Tastatur (15) zur Übertragung an eine Karte (20) über den Kartenleser (19) eingegebenen Daten auf dem Telefon- oder Funktelefonwed verhindern.

3. Telefon- oder Funktelefongerät nach wenigstens einem der vorhergehenden Ansprüche, **dadurch gekennzeichnet, dass** der Mikrokontroller (13) Mittel zum Chiffrieren der von der Tastatur (15) und/oder einer Karte (20) und/oder einem Mikrofon (10) des Geräts (3) an einen Serven (2), mit dem sich das Gerät über das Fernmeldenetz (1), das es verwendet, verbinden kann, gelieferten Informationen anhand von von dem Server über die dann zwischen ihnen hergestellte Verbindung und oder von einer Karte (20) uber den Kartenleser (19) gelieferten Informationen umfasst

4. Telefon-oder Funktelefongerät nach wenigstens einem der vorhergehenden Ansprüche, **dadurch gekennzeichnet, dass** der Mikrokontroller (13) Mittel umfasst, die es ermoglichen, die Tasten der Tastatur (15) zu nutzen, um lokal Operationen zur Nutzung der Karte (20), insbesondere zum Schreiben und Lesen, über den Kartenleser (19) durchzuführen.

5. Tastaturanordnung für ein Teilnehmer-Telefon- oder -Funktelefongerät mit einer Tastatur (15) und einem Kartenleser (19) fur eine Karte (20), insbesondere eine Karte mit internem Speicher und interner Logik, wobei das Gerät mit Kommunikationsmitteln (8, 12, 14) ausgestattet ist, die es ihm ermöglichen, Informationen zu schden und/oder zu empfangen, die dazu bestimmt sind, die Durchführung von die Geschäfte betreffenden Operationen zu ermöglichen, die die Verwendung einer Karte (20) erfordern, wobei das Gerät mit materiellen Sperrmitteln ausgestattet ist, die wenigstens einen Mikrokontrollen (13) zur Verwaltung des Geräts in einem Modul einschließen und dieses Gerät im Fall eines Versuchs, das Modul zu öffnen, unbenutzbar machen, **dadurch gekennzeichnet, dass** die Anordnung Mittel umfasst, um die Vertraulichkeit von mit Hilfe der Tastatur (15) zum Übertragen an eine Karte (20) über den Kartenleser (19) eingegebenen Informationen zu gewährleisten, wobei diese Mittel materielle Mittel, die die Tastatur im Falle eines Versuchs der Demontage unbenutzbar machen, und materielle Sperrmittel umfassen, die wenigstens eine Schaltung (15A) der Tastatur in einem Modul einschließen, mit wenigstens einem Verwaltungs-Mikrokontroller (13), an den die Schaltung der Tastatur und evtl. ein Teil des Kartenlesers (19) angeschlossen ist, wobei der Einschluss so durchgeführt ist, dass das Modul beim Versuch eines Öffnens unbenutzbar wird.
